# EUROPEAN PATENT SPECIFICATION

(11) **EP 0 496 404 B1**
(45) Date of publication and mention of the grant of the patent: **21.05.1997**
(21) Application number: 92101097.1
(22) Date of filing: 23.01.1992
(51) Int. Cl.: C08G 63/78, C08G 63/19

(54) **Process for the preparation of aromatic polyesters**
Verfahren zur Herstellung aromatischer Polyester
Procédé de préparation de polyesters aromatiques

(30) Priority: 25.01.1991 IT MI910189
(43) Date of publication of application: 29.07.1992
(73) Proprietor: ENICHEM S.p.A., I-20124 Milano (IT)
(72) Inventor: Berti, Corrado, Dr., I-48022 Lugo di Romagna, Ravenna (IT); Pilati, Francesco, Dr., I-40127 Bologna (IT); Bonora, Virna, Dr., I-40139 Bologna (IT); Fiorini, Maurizio, Dr., I-40053 Bazzano, Bologna (IT); Borghi, Italo, Dr., I-44100 Ferrara (IT); Fiore, Leonardo, Dr., I-20151 Milan (IT)
(74) Representative: Weinhold, Peter, Dr.

(56) References cited:
- DE-A- 2 232 877
- FR-A- 1 299 248
- GB-A- 773 538
- US-A- 3 317 464
- US-A- 3 395 119
- US-A- 4 966 958

## Description

The present invention relates to a process for preparing aromatic polyesters.
More particular, the present invention relates to a process for preparing aromatic polyesters free of carbonate units having excellent physico-mechanical properties and solvent-resistance.

Wholly aromatic polyesters are polymers of high technological interest due to their excellent mechanical and thermal properties.

The physico-mechanical characteristics of these polymers are due to the high number of aromatic rings contained in their macromolecules. The aromatic polyesters obtained by the process of the present invention are characterized, in fact, by an alternating sequence of aromatic groups and ester groups.

Said products exhibit an excellent combination of properties such as, for example, a glass transition temperature higher than 170°C, a tensile modulus higher than 2,300 MPa, a flexural strength higher than 67 MPa and excellent resistance to solvents and oils.

They may be utilized in a plurality of industrial technologies such as extrusion, injection molding, spinning, film-forming, etc.

Typically, an aromatic polyester consists of moities deriving from aromatic diacids and moieties deriving from diphenols. Polyesters consisting of units derived from bisphenol A and dimethyl isophthalate are known from US-A-4,966,958. It is generally known that aromatic diacids and diphenols do not easily react with each other and, even if a reaction occurs, polymers having a sufficiently high molecular weight are hard to obtain.

Due to this reason, the synthesis of an aromatic polyester generally comprises a first step in which a reactive derivative of one of the two monomers is prepared which is then polycondensed with the other monomer in a second step. According to what is reported in "Comprehensive Polymer Science" (vol. 5, page 317, 1987), three processes of major industrial interest for the synthesis of aromatic polyesters can be distinguished, depending on whether one of the two components involved in the synthesis is a diacyl chloride, a diaryldicarboxylate or a diphenol diacetate.

The synthesis starting from diacyl chlorides comprises an initial chlorination of the diacid and a subsequent reaction of the dichloride with a diphenol, for example according to the interface polymerization method. This process, although conducted at low temperatures, requires complex operations for synthesizing and purifying the dichloride, as well as large amounts of solvent in the polymer synthesis. Furthermore, it also requires complex operations for purifying the solutions of the obtained polymer and for recovering the polyester from such solutions.

The processes starting from diaryl dicarboxylates or from diphenol diacetates, respectively described, for example, in US-A-3,395,119 and 3,317,464, comprise a polycondensation in the molten state at high temperature. Both processes are based on the removal of a volatile condensation product (phenol or acetic acid) and are carried out in two steps: in the first step, the formation of oligomers occurs, while in the successive step, carried out under more drastic temperature (300-350°C) and pressure [0.013 kPa(0.1 torr)] conditions, the polymer is obtained.

JP-A-63041529 discloses a polyester which has been prepared by reacting 4,4'-isopropylidene diphenylene dimethyldicarbonate and terephthalic dimethyl ester in the presence of a transesterification catalyst.

There has now been found a process for preparing aromatic polyesters for which the starting materials are readily available.

According to the present invention, the process for preparing aromatic polyesters free of carbonate units comprises the reaction of at least one dialkyl ester of an aromatic dicarboxylic acid with at least one aromatic polycarbonate in the presence of an esterification or transesterification catalyst.

The process of the present invention is preferably conducted in two steps at different temperatures. In the first step, an aromatic polycarbonate is mixed with an alkyl ester of an aromatic dicarboxylic acid, and the mixture is heated to a temperature ranging from 200 to 300°C, in the presence of a transesterification catalyst.

A portion of the dialkylcarbonate formed by transesterification is distilled off.

In the second step, the temperature is raised up to 280 to 350°C and the remaining portion of dialkylcarbonate is removed under vacuum (generally 0.0067-0.067 kPa (0.05 - 0.5 torr)), giving rise to the formation of a high molecular weight aromatic polyester.

During the synthesis process, the following transesterification reactions between the ester and carbonate groups take place: 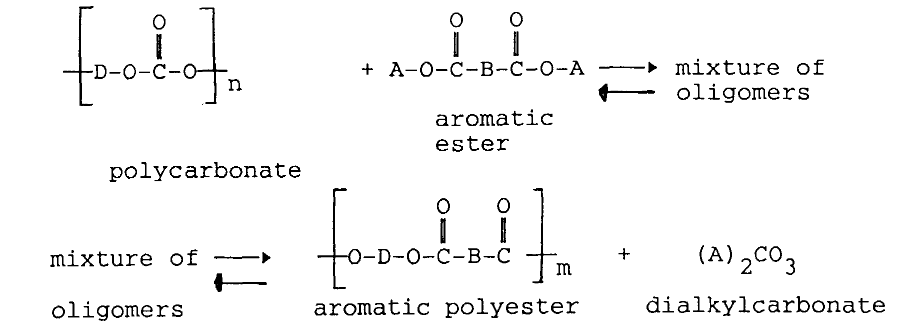 where n is up to 500 in the case of an oligomer or polycarbonate polymer, m ranges from 50 to 500, D is the aromatic residue of a diphenol and A and B are defined hereinbelow.

As it is known for all transesterification reactions, also during the process of the present invention the reactive system tends to the equilibrium, which is shifted towards the quantitative formation of the high molecular weight aromatic polyester by removal of the dialkyl carbonate formed.

In the process of the present invention, any aromatic polycarbonate known from the art can be utilized, either alone or in admixture with other polycarbonates.

As polycarbonates preferably the polymers or copolymers of general formula (I) are employed: 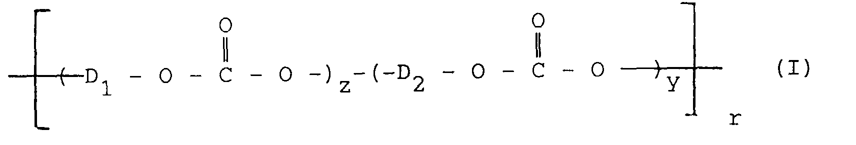 wherein z and y independently range from 1 to 499, r is an integer such that (ry+rz) does not exceed 500 and D₁ and D₂, identical or different from each other, represent an aromatic residue of a diphenol.

Examples of aromatic residues D, D₁ and D₂ comprise ortho-, meta-, para-phenylene, diphenylene, 2,6-naphthylene, 2,8-naphthylene, 1,5-naphthylene, 1,4-naphthylene and groups of formula 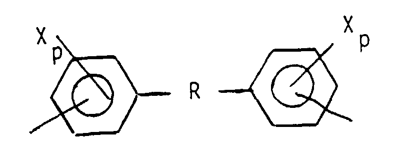 wherein:
each X is independently selected from halogen such as F, Cl, Br and C₁-C₆ alkyl groups (e.g. Cl, CH₃ and C₂H₅) and p is 0 or an integer ranging from 1 to 4 (e.g. 1 or 2);
R is -O-, -SO₂-, -S-, 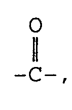 or a group of formula 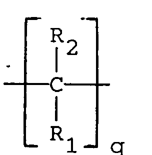 wherein R₁ and R₂, the same or different from each other, are H or C₁-C₄ alkyl (e.g. CH₃ or C₂H₅), and q is 1 to 6 (e.g. 1 to 3).

Among the polycarbonates utilizable in the present invention the most preferred ones are those based on bisphenol A, examples of which are the products marketed under the tradenames LEXAN® (General Electric Company), MAKROLON® (Bayer) and SINVET® (Montedipe).

Any aromatic dicarboxylic acid having both of the carboxylic groups esterified with aliphatic alkyl radicals can be used in the process of the present invention.

In particular, preferred dialkyl dicarboxylates utilizable in the present invention, individually or in admixture, are those of general formula (II) : 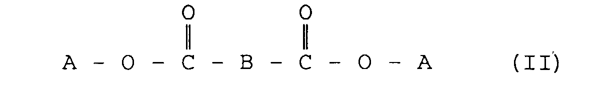 wherein A is a C₁-C₄-alkyl group (e.g. methyl, ethyl or butyl) and B is m-, o- or p-phenylene, 2,6-naphthylene, 2,8-naphthylene, 1,5-naphthylene, 1,4-naphthylene, oxydiphenylene, diphenylene and the like.

Among the dialkyl dicarboxylates most preferred are the derivatives of isophthalic and terephthalic acids, either individually or in admixture with each other.

The catalysts utilizable in the process of the present invention comprise those conventionally used for esterification or transesterification processes such as, for example, Ti or Zr tetraalkoxides. Preferred catalysts are titanium tetraisopropoxide and tetra-n-butoxide.

The catalyst can be added to the reaction mixture in amounts usually ranging from 0.1% to 5.0% and preferably from 0.5% to 3% by weight calculated on the aromatic polycarbonate and/or dialkyl dicarbonate employed at the beginning of the process.

In the process of the present invention, the polycarbonate (or the oligomeric polycarbonate, or a mixture thereof) can be fed in admixture with the diester of the aromatic diacid or separately therefrom.

The ratios of the (at least) two components refer to the molar ratio of the respective aromatic residues (diphenol and diacid). The two components can be fed in the stoichiometric ratio (molar ratio about 1:1) or, preferably, with an excess of dialkylester of the aromatic dicarboxylic acid ranging from >0 to 100% and, more preferred, with an excess of from 10% to 50%.

If an excess of dialkyl dicarboxylate is used, the unreacted portion will be distilled off under high vacuum in the last steps of the process.

If a two-step process is used, the first step of the process of the present invention is conducted at temperatures of from 200 to 300°C, and preferably from 260 to 290°C.

The second step of said process can be conducted at temperatures ranging from 280 to 350°C under progressive reduction of the pressure to values lower than or equal to 0.067 kPa (0.5 torr).

In the following non-limitative examples, the aromatic polyesters obtained by means of the process of the present invention were characterized by their inherent viscosity, which is a function of the molecular weight. The measurement was made in phenol/tetrachloroethane (60/40 b.w.) or chloroform solutions, containing 0.5 g/dl of polymer, at 30°C.

The aromatic polyester structure was confirmed by IR- and ¹H-NMR spectroscopy.

### EXAMPLE 1

244 g of poly(4,4'-isopropylidene diphenylene carbonate), 268 g of dimethyl terephthalate and 1.14 g of catalyst [Ti(OBu)₄] were introduced into a stainless steel polymerization reactor equipped with a distillation column and two condensers cooled with running tap water and with liquid nitrogen, respectively.

The reaction mixture was heated under stirring and in a nitrogen atmosphere up to 280°C and was maintained at said temperature for 60 minutes.

The dimethylcarbonate distillation was then started, and 47 ml of dimethylcarbonate were collected over 120 minutes. On conclusion of the distillation, the temperature inside the reactor was raised to 298°C.

Vacuum [0.05 kPa(0.4 torr)] was generated and the temperature was raised to 310°C. The removal of all the volatile products was then continued for 30 minutes, gradually increasing the temperature to 340°C over 30 minutes.

The polymerization was stopped and the polymer which had formed was collected and characterized. The polymer obtained was composed of poly(4,4'-isopropylidene diphenylether terephthalate) having an inherent viscosity of 0.96 dl/g in phenol/ tetrachloroethane.

### EXAMPLE 2

An aromatic polyester was obtained by operating under analogous conditions and for the same periods of time as described in example 1, but introducing into the reactor 244 g of poly(4,4'-isopropylidene diphenylene carbonate), 134 g of dimethyl terephthalate, 134 g of dimethyl isophthalate and 1.34 g of catalyst [Ti(OBu)₄].

In the first reaction step, 26 ml of dimethylcarbonate were collected.

The product obtained on conclusion of the reaction consisted of a statistic copolymer of poly(4,4'-isopropylidene diphenylene isophthalate) and poly(4,4'-isopropylidene diphenylene terephthalate), having an inherent viscosity of 0.96 dl/g in chloroform.

## Claims

1. A process for preparing aromatic polyesters free of carbonate units, comprising the reaction of at least one dialkyl ester of an aromatic dicarboxylic acid with at least one aromatic polycarbonate in the presence of an esterification or transesterification catalyst.

2. The process according to claim 1, which is conducted in two steps, the temperature in the first step ranging from 200 to 300°C and the temperature in the second step ranging from 280 to 350°C, said second step being carried out under reduced pressure.

3. The process according to any one of claims 1 and 2, in which the polycarbonate has general formula (I): 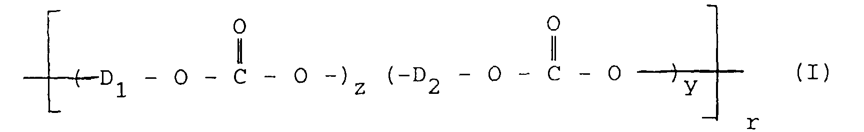 wherein z and y range from 1 to 500, r is an integer such that (ry+rz) does not exceed 500 and D₁ and D₂, the same or different from each other, represent an aromatic radical derived from a diphenol.

4. The process according to claim 3, in which the phenolic radicals D₁ and/or D₂ are selected from ortho-, meta-, para-phenylene, diphenylene, 2,6-naphthylene, 2,8-naphthylene, 1,5-naphthylene, 1,4-naphthylene, and groups of formula 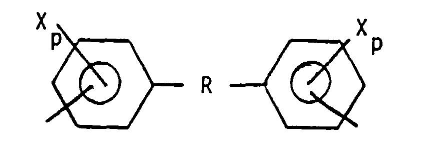 wherein:
each X is independently selected from halogen and C₁-C₆ alkyl groups; p is 0 or an integer of from 1 to 4, and
R is -O-, -SO₂-, -S-, 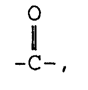 or a group of formula 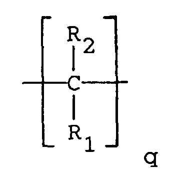 wherein:
R₁ and R₂, the same or different from each other, are H or C₁-C₄ alkyl, and q ranges from 1 to 6.

5. The process according to any one of claims 3 and 4, wherein D₁ and/or D₂ are derived from bisphenol-A.

6. The process according to any one of the preceding claims, in which the dialkyl ester of the aromatic dicarboxylic acid has general formula (II): 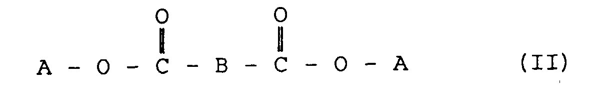 wherein A is C₁-C₄ alkyl and B is selected from meta-, ortho- or para-phenylene, 2,6-naphthylene, 2,8-naphthylene, 1,5-naphthylene , 1,4-naphthylene, oxydiphenylene and diphenylene; and preferably comprises a derivative of iso- and/or terephthalic acid.

7. The process according to any one of the preceding claims, in which the esterification or transesterification catalyst is selected from the Ti and Zr tetraalkoxides, preferably titanium tetraisopropoxide and tetra-n-butoxide.

8. The process according to any one of the preceding claims wherein the esterification or transesterification catalyst is employed in amounts of from 0.1 to 5.0% by weight calculated on the polycarbonate.

9. The process according to any one of the preceding claims, in which the aromatic dicarboxylate is present in an excess of up to 100% and preferably of from 10 to 50% referred to the stoichiometric amount of polycarbonate.

## Patentansprüche

1. Verfahren zur Herstellung von aromatischen Polyestern, welche frei von Carbonateinheiten sind, welches Verfahren das Umsetzen von mindestens einem Dialkylester einer aromatischen Dicarbonsäure mit mindestens einem aromatischen Polycarbonat in Gegenwart eines Veresterungs- oder Umesterungskatalysators umfaßt.

2. Verfahren gemäß Anspruch 1, welches in zwei Schritten durchgeführt wird, wobei die Temperatur im ersten Schritt von 200 bis 300°C reicht und die Temperatur im zweiten Schritt von 280 bis 350°C reicht, wobei der zweite Schritt bei einem reduzierten Druck ausgeführt wird.

3. Verfahren gemäß einem der Ansprüche 1 und 2, in welchem das Polycarbonat die allgemeine Formel (I) besitzt: 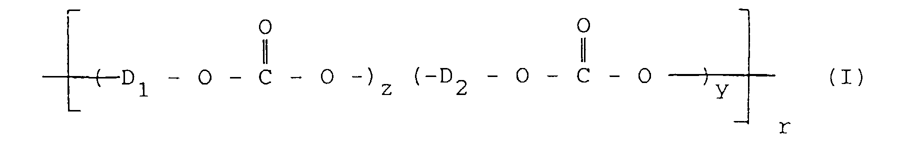 wobei z und y von 1 bis 500 reicht, r eine ganze Zahl ist, so daß (ry+rz) 500 nicht überschreitet, und D₁ und D₂, welche gleich oder voneinander verschieden sind, einen von einem Diphenol abgeleiteten aromatischen Rest darstellen.

4. Verfahren gemäß Anspruch 3, in welchem die Phenolreste D₁ und/oder D₂ ausgewählt sind aus ortho-, meta-, para-Phenylen, Diphenylen, 2,6-Naphthylen, 2,8-Naphthylen, 1,5-Naphthylen, 1,4-Naphthylen und Gruppen der Formel: 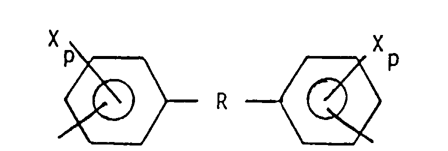 wobei jedes X unabhängig aus Halogen und C₁-C₆-Alkyl-gruppen ausgewählt ist, p gleich 0 oder eine ganze Zahl von 1 bis 4 ist, und R gleich -O-, -SO₂-, -S-, 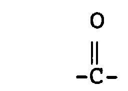 oder eine Gruppe der Formel 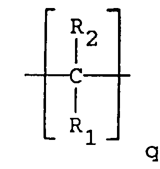 ist,
wobei R₁ und R₂, welche gleich oder voneinander verschieden sind, H oder C₁-C₄-Alkyl sind, und q von 1 bis 6 reicht.

5. Verfahren gemäß einem der Ansprüche 3 und 4, wobei D₁ und/oder D₂ von Bisphenol-A abgeleitet sind.

6. Verfahren gemäß einem der vorherigen Ansprüche, in welchem der Dialkylester der aromatischen Dicarbonsäure die allgemeine Formel (II) besitzt: 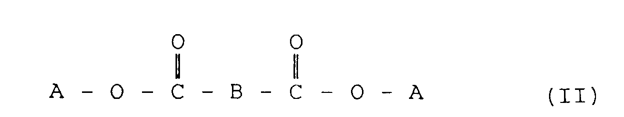 wobei A gleich C₁-C₄-Alkyl ist, und B ausgewählt ist aus meta-, ortho- oder para-Phenylen, 2,6-Naphthylen, 2,8-Naphthylen, 1,5-Naphthylen, 1,4-Naphthylen, Oxydiphenylen und Diphenylen, und vorzugsweise ein Derivat der iso- und/oder Terephthalsäure umfaßt.

7. Verfahren gemäß einem der vorherigen Ansprüche, in welchem der Veresterungs- oder Umesterungskatalysator aus Ti- und Zr-Tetraalkoxiden, vorzugsweise Titan-Tetraisopropoxid und -Tetra-n-butoxid, ausgewählt ist.

8. Verfahren gemäß einem der vorherigen Ansprüche, in welchem der Veresterungs- oder Umesterungskatalysator in Mengen von 0,1 bis 5,0 Gew.-%, berechnet auf das Polycarbonat, verwendet wird.

9. Verfahren gemäß einem der vorherigen Ansprüche, in welchem das aromatische Dicarboxylat in einem Überschuß von bis zu 100% und vorzugsweise von 10 bis 50%, bezogen auf die stöchiometrische Menge an Polycarbonat, vorhanden ist.

## Revendications

1. Procédé pour préparer des polyesters aromatiques exempts de motifs carbonate, qui comprend la réaction d'au moins un ester de dialkyle d'un acide dicarboxylique aromatique, avec au moins un polycarbonate aromatique en présence d'un catalyseur d'estérification ou de transestérification.

2. Procédé conforme à la revendication 1, que l'on mène en deux étapes, la température dans la première étape étant comprise entre 200 et 300° C et la température dans la deuxième étape étant comprise entre 280 et 350° C, ladite seconde étape étant effectuée sous pression réduite.

3. Procédé conforme à l'une quelconque des revendications 1 et 2, dans lequel le polycarbonate répond à la formule générale (I): 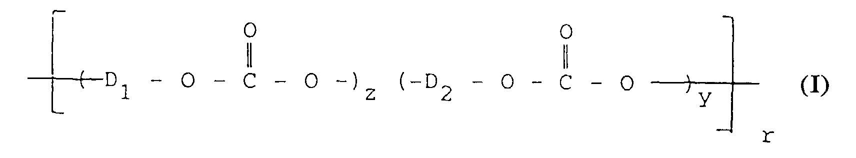 dans laquelle z et y sont compris entre 1 et 500, r est un nombre entier tel que (ry+rz) ne dépasse pas 500, et D₁ et D₂, identiques ou différents l'un de l'autre, représentent un radical aromatique dérivé d'un diphénol.

4. Procédé conforme à la revendication 3, dans lequel les radicaux phénoliques D₁ et/ou D₂ sont choisis parmi les ortho-, méta-, paraphénylène, diphénylène, 2,6-naphtylène, 2,8-naphtylène, 1,5-naphtylène, 1,4-naphtylène et des groupes répondant à la formule : 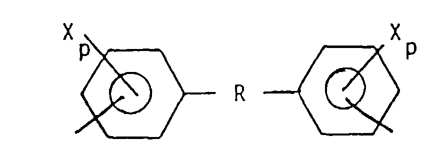 dans laquelle chaque X est indépendamment choisi parmi un atome d'halogène et des groupes alkyle en C₁-C₆, p vaut 0 ou un nombre entier compris entre 1 et 4, et R représente -O-, -SO₂-, -S-, 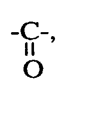 ou un groupe de formule 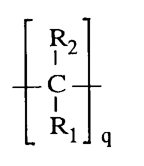 dans laquelle R₁ et R₂, identiques ou différents l'un de l'autre, représentent H ou un groupe alkyle en C₁-C₄, et q est compris entre 1 et 6.

5. Procédé conforme à l'une quelconque des revendications 3 et 4, dans lequel D₁ et/ou D₂ sont dérivés du bisphénol-A.

6. Procédé conforme à l'une quelconque des précédentes revendications, dans lequel l'ester de dialkyle de l'acide dicarboxylique aromatique répond à la formule générale (II) : 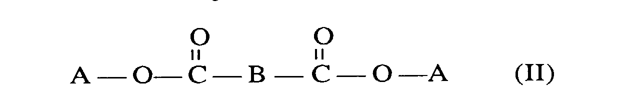 dans laquelle A représente un groupe alkyle en C₁-C₄ et B est choisi parmi les ortho-, méta-, para-phénylène, 2,6-naphtylène, 2,8-naphtylène, 1,5-naphtylène, 1,4-naphtyléne, oxydiphénylène et diphénylène; et de préférence comprend un dérivé de l'acide iso- et/ou téréphtalique.

7. Procédé conforme à l'une quelconque des précédentes revendications, dans lequel le catalyseur d'estérification ou de transestérification est choisi parmi les tétra-alkylates de Ti et de Zr, de préférence parmi les tétraisopropylate et tétra-n-butylate de titane.

8. Procédé conforme à l'une quelconque des précédentes revendications, dans lequel on utilise le catalyseur d'estérification ou de transestérification en des quantités comprises entre 0,1 et 5,0 % en poids calculées par rapport au polycarbonate.

9. Procédé conforme à l'une quelconque des précédentes revendications, dans lequel le dicarboxylate aromatique est présent en un excès allant jusqu'à 100 % et de préférence compris entre 10 et 50 % par rapport à la quantité stochiométrique du polycarbonate.
